# EUROPÄISCHE PATENTSCHRIFT

(11) **EP 3 885 731 B1**
(45) Veröffentlichungstag und Bekanntmachung des Hinweises auf die Patenterteilung: **07.08.2024**
(21) Anmeldenummer: 21164333.3
(22) Anmeldetag: 23.03.2021
(51) Int. Cl.: G01M 3/28, G01M 3/32

(54) **FLÜSSIGGAS-LEITUNGSSYSTEM, VERFAHREN ZUM DETEKTIEREN EINER LECKAGE UND COMPUTERPROGRAMM**
LIQUID GAS ROUTING SYSTEM, METHOD FOR DETECTING A LEAK AND COMPUTER PROGRAM
SYSTÈME DE TUYAUTERIE DE GAZ LIQUIDE, PROCÉDÉ DE DÉTECTION D'UNE FUITE ET PROGRAMME INFORMATIQUE

(30) Priorität: 24.03.2020 EP 20165385
(43) Veröffentlichungstag der Anmeldung: 29.09.2021
(73) Patentinhaber: GOK Regler- und Armaturen Gesellschaft mbH & Co. KG, 97340 Marktbreit (DE)
(72) Erfinder: SMEENK, Alfons, 97297 Waldbüttelbrunn (DE)
(74) Vertreter: Vossius & Partner Patentanwälte Rechtsanwälte mbB

(56) Entgegenhaltungen:
- JP-A- H03 267 749
- US-A1- 2015 206 359
- BRECKNER K: "DURCHFLUSSMESSUNG VON FLUESSIGKEITEN DURCH ERFASSEN DER AENDERUNGS-GESCHWINDIGKEIT EINES NIVEAUS", AUTOMATISIERUNGSTECHNISCHE PRAXIS - ATP, OLDENBOURG INDUSTRIEVERLAG, MUNCHEN, DE, vol. 39, no. 5, 1 May 1997 (1997-05-01), pages 40, 42 - 45, XP000689328, ISSN: 0178-2320

## Beschreibung

### TECHNISCHES GEBIET

Die Erfindung betrifft ein Flüssiggas-Leitungssystem, ein Fahrzeug, vorzugweise ein Wohnwagen, Caravan, Campingbus, oder Wohnmobil, ein Verfahren zum Detektieren einer Leckage in einem Flüssiggasleitungssystem, ein Computerprogramm, ein computerlesbares Medium sowie ein Steuergerät.

### TECHNISCHER HINTERGRUND

Es ist bekannt, dass Flüssiggas-Leitungssysteme in Fahrzeugen sogenannte Abschalt- bzw. Crash-Ventile aufweisen, um bei einem Unfall den Gasfluss im Leitungssystem zu stoppen und so durch Unfälle verursachte Leckagen im System zu verhindern.

Solche Abschalt- bzw. Crash-Ventile sind beispielsweise in den europäischen Anmeldungen mit der Anmeldenummer 19 20 9432.4 (Anmeldetag: 15.11.2019) und 19 20 9407.6 (Anmeldetag: 15.11.2019) offenbart, deren Inhalt hiermit in seiner Gesamtheit durch Bezugnahme in die vorliegende Anmeldung aufgenommen wird.

Die JP-H03-267749 betrifft eine Gaslecküberwachungsvorrichtung, die ein Gasleckberechnungsmittel aufweist, welches den Gasfluss durch Punkte A und B der Gasleitung integriert und eine Warnung ausgibt, wenn der Unterschied zwischen den integrierten Gasflüssen groß ist.

Breckner K.: "Durchflußmessung von Flüssigkeiten durch Erfassen der Änderungsgeschwindigkeit eines Niveaus", Automatisierungstechnische Praxis - ATP, Oldenbourg Industrieverlag, München, DE, Bd. 39, Nr. 5, 1. Mai 1997, Seiten 40, 42-45, XP000689328, ISN: 0178-2320, beschreibt eine Durchflussmessung unter Zuhilfenahme der Änderungsgeschwindigkeit eines Niveaus in einem zylindrischen Behälter, bei der das Signal eines Niveautransmitters verwendet wird. Durch Differenzbildung zwischen diesem Durchflusssignal und dem Signal einer weiteren, vom Behälter entfernten Durchflussmessung in der Rohrleitung könne die Rohrleitung auf ein eventuelles Leck überwacht werden,

Die US 2015/206359 A1 offenbart ein Fahrzeug umfassend eine Lecküberwachungsvorrichtung für ein Flüssiggassystem. Die Lecküberwachung basiert auf einem Signal eines Füllstandsensors eines Tanks und einer verbrauchten Masse an Flüssiggas.

### ZUSAMMENFASSUNG DER ERFINDUNG

Eine Aufgabe der Erfindung ist es, die Bedienung, Überwachung und Wartung von Flüssiggas-Leitungssystemen zu verbessern. Eine besondere Aufgabe kann darin gesehen werden, ungewöhnliche Verbrauchssituationen, insbesondere Leckagen, zuverlässiger zu ermitteln und/oder zu orten. Eine weitere Aufgabe der Erfindung kann darin gesehen werden, im Flüssiggas-Leitungssystem auftretende Fehler automatisch zu ermitteln und diese gegebenenfalls an einen Benutzer zu melden. Solche Fehler können beispielsweise Leckagen, ein niedriger Füllstand einer Gasquelle, ein aufgebrauchter Filter, ein geschlossenes Abschalt- und/oder Crash-Ventil, eine Brandsituation und/oder eine untypische Verbrauchssituation sein.

Die oben genannten Aufgaben werden durch die in den unabhängigen Ansprüchen genannten Gegenstände gelöst. Weitere Ausführungsformen der Erfindung sind in den abhängigen Ansprüchen, der Beschreibung und den Zeichnungen offenbart.

Eine Ausführungsform der Erfindung betrifft ein Flüssiggas-Leitungssystem mit einer Leitungsanordnung mit einem ersten Anschluss für eine erste Gasquelle und einem zweiten Anschluss für einen Gasverbraucher. Das Flüssiggas-Leitungssystem weist ferner eine Steuereinrichtung, einen in der Leitungsanordnung angeordneten Durchflusssensor, der eingerichtet ist, der Steuereinrichtung ein eine Flüssiggas-Durchflussrate charakterisierendes erstes Signal zu übertragen, einen ersten Füllstandsensor für die erste Gasquelle, vorzugsweise einen Gewichtssensor zur Messung des Gewichts der ersten Gasquelle, der eingerichtet ist, der Steuereinrichtung ein einen Füllstand der ersten Gasquelle charakterisierendes drittes Signal zu übertragen und einen in der Leitungsanordnung angeordneten Verbrauchssensor, der eingerichtet ist, der Steuereinrichtung ein einen am zweiten Anschluss erfolgenden Flüssiggas-Verbrauch charakterisierendes zweites Signal zu übertragen, auf. Die Steuereinrichtung ist eingerichtet, basierend auf dem ersten Signal, dem zweiten Signal und dem dritten Signal zu ermitteln, ob eine ungewöhnliche Verbrauchssituation vorliegt. Unter bestimmten Umständen, etwa dann, wenn keine Leckage erfasst werden soll, kann es genügen entweder den Durchflusssensor oder den Verbrauchssensor vorzusehen, insbesondere in Verbindung mit einem oder mehreren der unten erwähnten Temperatursensoren.

Das Flüssiggas-Leitungssystem kann insbesondere ein in einem Fahrzeug verbautes Flüssiggas-Leitungssystem sein. Das Fahrzeug ist vorzugsweise ein Reisemobil, ein Wohnwagen oder ein Schiff (wobei darunter auch Caravans und Campingbusse fallen). Unter Flüssiggas wird typischerweise Propan und/oder Butan und/oder Gemische davon verstanden. Flüssiggas kann jedoch auch Propen, Buten, Isobutan und/oder Isobuten sein oder enthalten. Im Rahmen der vorliegenden Offenbarung bezieht sich der Begriff "Gas" durchgehend auf Flüssiggas. Das Flüssiggas ist insbesondere ein brennbares Gas. Das Flüssiggas kann zumindest entlang eines Teils des Leitungssystems im gasförmigen Zustand vorliegen. Soweit nachfolgend der Begriff "Flüssiggas" verwendet wird, schließt dies daher den Fall ein, dass das Flüssiggas in dem gasförmigen Zustand vorliegt und/oder in diesen übergegangen ist (z. B. indem es ausgehend von einer Flüssiggas-Gasflasche durch einen Druckminderer geleitet wurde).

Das Flüssiggas-Leitungssystem weist einen ersten Abschnitt und einen zweiten Abschnitt auf. Der erste Abschnitt des Flüssiggas-Leitungssystems und/oder der zweite Abschnitt des Flüssiggas-Leitungssystems kann jeweils einen Leitungsabschnitt und/oder einen Schlauchabschnitt aufweisen. Der erste Abschnitt ist stromaufwärts des Durchflusssensors zwischen dem ersten Anschluss und dem Durchflusssensor, und der zweite Abschnitt ist stromabwärts des Durchflusssensors zwischen dem Durchflusssensor und dem zweiten Anschluss oder dem Verbrauchssensor angeordnet. Weiterhin können im ersten Abschnitt und/oder im zweiten Abschnitt zusätzliche Komponenten und/oder Armaturen vorgesehen sein. Beispielsweise kann der erste Abschnitt einen Gasdruckregler, eine Filtereinheit und/oder ein Umschaltventil wie hierin offenbart aufweisen. Der zweite Abschnitt kann beispielsweise einen Crashsensor wie hierin offenbart aufweisen. Neben dem ersten und zweiten Abschnitt kann die Leitungsanordnung weitere Abschnitte aufweisen.

Am zweiten Anschluss können ein oder mehrere Flüssiggas-Verbraucher, z.B. Heizung, Herd, Kühlschrank, etc. angeschlossen sein. Der zweite Anschluss kann auch mehrere Anschlüsse aufweisen.

Unter einer Leitungsanordnung ist eine zusammenhängende Gasleitung zu verstehen, die zusätzliche, im Rahmen der Erfindung beschriebene Elemente, zum Beispiel den Durchflusssensor und den Verbrauchssensor, enthalten kann. Unter einem Durchflusssensor ist eine Komponente der Leitungsanordnung zu verstehen, die im weitesten Sinne einen Durchfluss von Flüssiggas feststellen kann. Vorzugsweise kann der Durchflusssensor auch eine Durchflussrate des Flüssiggases ermitteln. Unter einer Gasquelle kann im Kontext der Erfindung insbesondere eine Gasflasche verstanden werden.

Vorzugsweise ist der Verbrauchssensor am oder nahe am, vorzugsweise nicht weiter entfernt als 10 cm, 30 cm oder 50 cm vom zweiten Anschluss angeordnet.

Der Verbrauchssensor ist bevorzugt eine Verbrauchsklappe. Mit anderen Worten kann der Verbrauchssensor in Form einer Klappe ausgebildet sein, die durch den Gasdurchfluss geöffnet wird und so einen Gasverbrauch anzeigt, und bei Ausbleiben eines Gasdurchflusses wieder geschlossen wird und so anzeigt, dass kein Verbrauch vorliegt. In diesem Fall kann das zweite Signal eine Offen- oder Schließstellung der Verbrauchsklappe charakterisieren. Es ist jedoch nicht zwingend erforderlich, dass der Verbrauchssensor in Form einer Klappe ausgebildet ist. Bei dem Verbrauchssensor kann es sich beispielsweise auch um einen Durchflusssensor handeln.

Unter den Merkmalen, dass das erste Signal eine Flüssiggasdurchflussrate charakterisiert, ist zu verstehen, dass aus dem ersten Signal ein Rückschluss auf die Flüssiggasdurchflussrate gezogen werden kann. Ebenso ist zu verstehen, dass aus dem zweiten Signal ein Rückschluss auf einen Verbrauch am zweiten Anschluss, vorzugsweise einen Rückschluss auf eine Offen- oder Schließstellung des Verbrauchssensors, gezogen werden kann. Allgemein ist im Kontext der Erfindung unter dem Merkmal, dass ein Signal eine gewisse Messgröße oder Eigenschaft charakterisiert, zu verstehen, dass aus dem Signal die Messgröße oder Eigenschaft ableitbar und/oder ermittelbar ist.

Unter dem dritten, einen Füllstand der ersten Gasquelle charakterisierenden Signal ist zu verstehen, dass aus dem dritten Signal ein Rückschluss auf den Füllstand der Gasquelle gezogen werden kann. Ein solches drittes Signal kann beispielsweise ein Gewicht der ersten Gasquelle angeben. Dieses Gewicht ist wiederum mit der Füllmenge der Gasquelle korreliert, sodass aus dem Gewicht eine Füllmenge abgeleitet werden kann.

Der erste Füllstandsensor kann ein Ultraschallsensor sein, der mittels Ultraschall misst, wie viel Gas sich in der Gasquelle bzw. -flasche befindet.

Auf diese Weise kann automatisch ermittelt werden, dass beispielsweise der Füllstand der Gasquelle niedrig ist und/oder dass die Gasquelle ausgetauscht werden muss und/oder dass das Flüssiggas-Leitungssystem auf eine zweite Gasquelle umgeschaltet werden muss.

Die Steuereinrichtung kann dazu eingerichtet sein, einen Typ der Gasquelle (z. B. ein Gasflaschentyp, der mit einem bestimmten Flaschengewicht korreliert, ein Füllgewicht der Flasche bei Einbau und/oder ein Flaschengewicht zu erfassen). Die Erfassung kann über eine manuelle Eingabe erfolgen, z. B. direkt an der Steuereinrichtung und/oder über ein Benutzerendgerät.

Alle im Kontext der Erfindung genannten Signale können über Kabel und/oder kabellos übertragen werden. Beispielsweise können die Signale unter Verwendung eines üblichen Funkstandards wie zum Beispiel WLAN, Bluetooth, ZigBee, LoRaWAN, LoRa und NBIOT übertragen werden.

Das Flüssiggas-Leitungssystem kann auch weitere Komponenten, zum Beispiel Ventile, Hähne und/oder Verschlusseinrichtungen aufweisen. Vorzugsweise ist jedes bzw. jeder bzw. jede der in der Leitungsanordnung angeordneten Ventile, Hähne und/oder Verschlusseinrichtungen eingerichtet, ein entsprechendes, den Zustand des jeweiligen Ventils, des jeweiligen Hahns, und/oder der jeweiligen Verschlusseinrichtung charakterisierendes Signal an die Steuereinrichtung übertragen.

Beispielsweise kann jeder Anschluss für einen Verbraucher mit einem jeweiligen Schnellschlussventil versehen sein. Ferner kann das Leitungssystem mit einem zentralen Kugelhahn versehen sein. Vorzugsweise sind auch diese jeweils dazu eingerichtet ein entsprechendes Signal, das eine Offen- und/oder Schließstellung charakterisiert, an die Steuereinrichtung zu übertragen.

Ein Vorteil des Flüssiggas-Leitungssystems ist, dass die automatische Detektion von ungewöhnlichen Verbrauchssituationen ermöglicht wird. Allgemein werden dadurch die Überwachung und Bedienung des Flüssiggas-Leitungssystems verbessert und vereinfacht.

Eine ungewöhnlichen Verbrauchssituation kann beispielsweise eine Leckage im Flüssiggas-Leitungssystems sein, d.h. dass mehr Gas aus dem Flüssiggas-Leitungssystem austritt, als von den am Flüssiggas-Leitungssystem angeschlossenen Verbrauchern verbraucht wird. Eine ungewöhnliche Verbrauchssituation kann auch vorliegen, wenn für die Tageszeit, die Jahreszeit und/oder das Datum, die Innentemperatur und/oder die Außentemperatur ein untypischer Gasverbrauch erfolgt.

Das Ermitteln einer ungewöhnlichen Verbrauchssituation ist insbesondere zusammen mit dem hierin offenbarten Temperatursensor und/oder mit dem erfassten Datum und/oder der erfassten Zeit, wie hierin offenbart, besonders vorteilhaft.

Die ungewöhnliche Verbrauchssituation weist eine Leckage im Flüssiggas-Leitungssystem auf.

Ein Vorteil des Flüssiggas-Leitungssystems ist, dass die automatische Detektion von Leckagen in der Leitungsanordnung ermöglicht wird. Allgemein wird dadurch die Überwachung und Bedienung des Flüssiggas-Leitungssystems verbessert und vereinfacht.

Vorzugsweise ist in einem Flüssiggas-Leitungssystem mit zumindest dem Durchflusssensor und dem Verbrauchssensor, wobei der Verbrauchssensor stromabwärts des Durchflusssensors angeordnet ist und vorzugsweise ein zweiter Abschnitt der Leitungsanordnung zwischen dem Durchflusssensor und dem Verbrauchssensor angeordnet ist, die Steuereinrichtung eingerichtet, einen Rückschluss auf eine Leckage im Flüssiggas-Leitungssystem, vorzugsweise im zweiten Abschnitt der Leitungsanordnung, zu ziehen, wenn das erste Signal eine positive Flüssiggas-Durchflussrate anzeigt und das zweite Signal anzeigt, dass am zweiten Anschluss kein Flüssiggas-Verbrauch erfolgt, vorzugsweise dass die Verbrauchsklappe geschlossen ist.

Die Steuereinrichtung kann alternativ oder zusätzlich eingerichtet sein, einen Rückschluss auf eine Leckage im Flüssiggas-Leitungssystem, vorzugsweise im zweiten Abschnitt der Flüssiggas-Leitungsanordnung, zu ziehen, wenn das erste Signal eine positive Flüssiggas-Durchflussrate anzeigt und das zweite Signal einen Flüssiggas-Verbrauch anzeigt, der kleiner als die positive Flüssiggas-Durchflussrate ist.

Unter einer positiven Flüssiggasdurchflussrate kann verstanden werden, dass die Flüssiggas-Durchflussrate grösser als Null oder größer als ein bestimmter Schwellwert, z.B. 15 cm³/h ist.

Das Flüssiggas-Leitungssystem weist vorzugsweise mehrere Anschlüsse für Gasquellen und/oder mehrere Anschlüsse für Flüssiggas-Verbraucher auf. Falls das Flüssiggas-Leitungssystem mehrere Anschlüsse für Flüssiggas-Verbraucher aufweist, können diese Anschlüsse jeweils einen Verbrauchssensor aufweisen. Darunter dass kein Flüssiggas-Verbrauch bzw. ein Flüssiggas-Verbrauch erfolgt, der kleiner ist da als die Flüssiggas-Durchflussrate, ist in diesem Fall zu verstehen, dass alle Verbrauchssensoren anzeigen, dass kein Flüssiggas-Verbrauch bzw. ein gesamter Flüssiggasverbrauch kleiner ist als die Flüssiggas-Durchflussrate.

Vorzugsweise ist in einem Flüssiggas-Leitungssystem mit zumindest dem Füllstandsensor und dem Durchflusssensor, wobei vorzugsweise ein erster Abschnitt der Leitungsanordnung zwischen dem ersten Anschluss und dem Durchflusssensor angeordnet ist, die Steuereinrichtung eingerichtet, einen Rückschluss auf eine Leckage im Flüssiggas-Leitungssystem, vorzugsweise im ersten Abschnitt der Flüssiggas-Leitungsanordnung, zu ziehen, wenn das erste Signal anzeigt, dass die Flüssiggas-Durchflussrate kleiner als ein Schwellwert, vorzugsweise null, ist und das dritte Signal anzeigt, dass der Füllstand, vorzugsweise das Gewicht der ersten Gasquelle abnimmt. Der besagte Schwellwert beträgt vorzugsweise 20 cm³/h oder weniger, oder 15 cm³/h oder weniger (z.B. 15 cm³/h).

Die Steuereinrichtung kann alternativ oder zusätzlich eingerichtet sein, einen Rückschluss auf eine Leckage im Flüssiggas-Leitungssystem, vorzugsweise im ersten Abschnitt der Flüssiggas-Leitungsanordnung, zu ziehen, wenn das dritte Signal anzeigt, dass der Füllstand, vorzugsweise das Gewicht der ersten Gasquelle abnimmt und das erste Signal eine Flüssiggas-Durchflussrate anzeigt, die kleiner als die Abnahme des Füllstands der Gasquelle ist.

Zusätzlich oder alternativ ist die Steuereinrichtung in einem Flüssiggas-Leitungssystem mit zumindest dem Verbrauchssensor und dem ersten Füllstandsensor, wobei vorzugsweise ein erster Abschnitt und/oder ein zweiter Abschnitt der Flüssiggas-Leitungsanordnung zwischen dem ersten Anschluss und dem Verbrauchssensor angeordnet ist, vorzugsweise eingerichtet, einen Rückschluss auf eine Leckage im Flüssiggas-Leitungssystem, vorzugsweise im ersten und/oder zweiten Abschnitt des Flüssiggas-Leitungssystems, zu ziehen, wenn das zweite Signal anzeigt, dass am zweiten Anschluss kein Flüssiggas-Verbrauch erfolgt, vorzugsweise dass die Verbrauchsklappe geschlossen ist, und das dritte Signal anzeigt, dass der Füllstand, vorzugsweise das Gewicht, der ersten Gasquelle abnimmt.

Die Steuereinrichtung kann alternativ oder zusätzlich eingerichtet sein, einen Rückschluss auf eine Leckage im Flüssiggas-Leitungssystem, vorzugsweise im ersten und/oder zweiten Abschnitt der Flüssiggas-Leitungsanordnung, zu ziehen, wenn das dritte Signal anzeigt, dass der Füllstand, vorzugsweise das Gewicht der ersten Gasquelle abnimmt und das zweite Signal einen Flüssiggas-Verbrauch anzeigt, der kleiner als die Abnahme des Füllstands der Gasquelle ist.

Auf diese Weise kann automatisch ermittelt werden, wo in der Flüssiggas-Leitungsanordnung die Leckage vorliegt. So kann das Auffinden und Beheben der Leckage vereinfacht werden.

Vorzugsweise ist die Steuereinrichtung eingerichtet, einem Benutzerendgerät (insbesondere einem Smartphone) die Information zu übertragen, dass eine Leckage im Flüssiggas-Leitungssystem vorliegt.

Im Rahmen der Erfindung kann das Benutzerendgerät kann beispielsweise ein mobiles Endgerät, wie z.B. ein Smartphone, Tablet oder Notebook, sein. Das Benutzerendgerät kann ferner auch eine zentrale Steuereinheit des Fahrzeugs sein, mit welchem der Benutzer die unterschiedlichen Geräte des Fahrzeugs (Heizung, Klimaanlage, etc.) bedienen kann.

Auf diese Weise kann der Benutzer schnell und zuverlässig über Leckagen informiert werden, so dass diese Gefahrensituation schnell behoben werden kann.

Die Steuereinrichtung ist eingerichtet, zwischen einer ersten Leckage zwischen dem ersten Anschluss und dem Durchflusssensor, d.h. im ersten Abschnitt der Flüssiggas-Leitungsanordnung, und einer zweiten Leckage zwischen dem Durchflussensor und dem Verbrauchssensor und/oder dem zweiten Anschluss, d.h. im zweiten Abschnitt der Flüssiggas-Leitungsanordnung, zu unterscheiden. Auf diese Weise kann die Leckage genauer geortet werden. Die Steuereinrichtung kann dem Benutzerendgerät auch die Ortung der Leckage übermitteln.

Vorzugsweise ist die Steuereinrichtung eingerichtet, einen Rückschluss auf eine Leckage zwischen dem ersten Anschluss und dem Durchflusssensor, vorzugsweise im ersten Abschnitt der Flüssiggas-Leitungsanordnung, zu ziehen, wenn das erste Signal anzeigt, dass die Flüssiggas-Durchflussrate kleiner als ein Schwellwert, vorzugsweise null, ist und das dritte Signal anzeigt, dass der Füllstand, vorzugsweise das Gewicht der ersten Gasquelle, abnimmt. Der Schwellwert beträgt vorzugsweise 20 cm³/h oder weniger, oder 15 cm³/h oder weniger (z.B. 15 cm³/h).

Die Steuereinrichtung kann alternativ oder zusätzlich eingerichtet sein, einen Rückschluss auf eine Leckage im Flüssiggas-Leitungssystem zwischen dem ersten Anschluss und dem Durchflusssensor, vorzugsweise im ersten Abschnitt der Flüssiggas-Leitungsanordnung, zu ziehen, wenn das dritte Signal anzeigt, dass der Füllstand, vorzugsweise das Gewicht der ersten Gasquelle abnimmt und das erste Signal eine Flüssiggas-Durchflussrate anzeigt, die kleiner als die Abnahme des Füllstands der Gasquelle ist.

Zusätzlich oder alternativ ist die Steuereinrichtung eingerichtet, einen Rückschluss auf eine Leckage zwischen dem Durchflusssensor und dem Verbrauchssensor und/oder dem zweiten Anschluss, vorzugsweise im zweiten Abschnitt der Flüssiggas-Leitungsanordnung, zu ziehen, wenn das erste Signal eine positive Flüssiggas-Durchflussrate anzeigt und das zweite Signal anzeigt, dass am zweiten Anschluss kein Verbrauch vorliegt, vorzugsweise dass die Verbrauchsklappe geschlossen ist.

Die Steuereinrichtung kann alternativ oder zusätzlich eingerichtet sein, einen Rückschluss auf eine Leckage im Flüssiggas-Leitungssystem zwischen dem Durchflusssensor und dem Verbrauchssensor und/oder dem zweiten Anschluss, vorzugsweise im zweiten Abschnitt der Flüssiggas-Leitungsanordnung, zu ziehen, wenn das erste Signal eine positive Flüssiggas-Durchflussrate anzeigt und das zweite Signal einen Flüssiggas-Verbrauch anzeigt, der kleiner als die positive Flüssiggas-Durchflussrate ist. Der Verbrauchssensor kann daher eingerichtet sein, um eine Größe des Flüssiggas-Verbrauchs zu bestimmen. Der Verbrauchssensor kann beispielsweise ein am oder nahe am zweiten Anschluss angeordneter Durchflusssensor sein.

Auf diese Weise kann die Leckage genauer geortet werden.

Vorzugsweise ist die Steuereinrichtung eingerichtet, an das mobile Gerät Informationen zu übertragen, dass eine Leckage zwischen dem ersten Anschluss und dem Durchflusssensor vorliegt. Auf diese Weise kann der Benutzer schnell und zuverlässig über den Ort der Leckage informiert werden, so dass diese Gefahrensituation schnell behoben werden kann.

Vorzugsweise ist die Steuereinrichtung eingerichtet, dem Benutzerendgerät Informationen zu übertragen, dass eine Leckage zwischen dem Durchflusssensor und dem Verbrauchssensor und/oder dem zweiten Anschluss vorliegt. Auf diese Weise kann der Benutzer schnell und zuverlässig über den Ort der Leckage informiert werden, so dass diese Gefahrensituation schnell behoben werden kann.

Erfindungsgemäß weist das Flüssiggas-Leitungssystem ferner einen Gasdruckregler auf, der zwischen dem ersten Anschluss und dem Durchflusssensor und/oder im ersten Abschnitt der Flüssiggas-Leitungsanordnung angeordnet ist.

Die Anordnung des Gasdruckreglers zwischen dem ersten Anschluss und dem Durchflusssensor und/oder im ersten Abschnitt der Flüssiggas-Leitungsanordnung kann vorteilhaft sein, da die Flüssiggas-Durchflussrate so genauer und/oder zuverlässiger bestimmt werden kann.

Vorzugsweise stellt der Gasdruckregler sicher, dass der Gasdruck sich innerhalb einem Soll-Bereich bewegt. Der Soll-Bereich kann beispielsweise 30 Millibar +/- 5 Millibar sein. Weiterhin kann der Gasdruckregler einstellbar sein, so dass der Soll-Bereich für den Gasdruck eingestellt werden kann.

Besonders bevorzugt ist der Gasdruckregler eingerichtet, ein den Gasdruck charakterisierendes neuntes Signal an die Steuereinrichtung zu übertragen.

Mit anderen Worten ist aus dem neunten Signal ein Rückschluss auf den aktuellen bzw. momentanen Gasdruck möglich. Darunter kann auch verstanden werden, dass aus dem neunten Signal die Information abgeleitet werden kann, dass der Gasdruck nicht im Soll-Bereich ist.

Vorzugsweise ist die Steuereinrichtung eingerichtet, die den Gasdruck betreffende Information an das Benutzerendgerät zu übertragen.

Vorzugsweise weist das Flüssiggas-Leitungssystem einen dritten Anschluss für eine zweite Gasquelle auf. In diesem Fall weist das Flüssiggas-Leitungssystem vorzugsweise ein in der Leitungsanordnung angeordnetes Umschaltventil auf, das einen ersten Einlass, einen zweiten Einlass und einen Auslass aufweist. Die Leitungsanordnung verbindet dabei den ersten Einlass mit dem ersten Anschluss, den zweiten Einlass mit dem dritten Anschluss sowie den Auslass mit dem zweiten Anschluss. Ferner ist das Umschaltventil in eine erste Stellung, in der der erste Einlass mit dem Auslass verbunden ist, und eine zweite Stellung, in der der zweite Einlass mit dem Auslass verbunden ist, schaltbar.

Mit anderen Worten kann das Umschaltventil so geschaltet werden, dass es entweder die erste Gasquelle oder die zweite Gasquelle die Leitungsanordnung mit Flüssiggas versorgt. Die oben genannten Merkmale und/oder Eigenschaften der ersten Gasquelle treffen analog auf die zweite Gasquelle zu. Insbesondere kann es sich hierbei um eine zweite Gasflasche handeln.

Das Umschaltventil kann als Y-Stück ausgebildet sein. Vorzugsweise stellt das Umschaltventil automatisch zwischen erster und zweiter Gasquelle um, wenn der Leitungsdruck in der ersten Gasquelle einen Schwellwert unterschreitet. Der Schwellwert beträgt vorzugsweise zwischen 600 und 800 Millibar. Das Merkmal, das die Leitungsanordnung den ersten Einlass mit dem ersten Anschluss, den zweiten Einlass mit dem dritten Anschluss und den Auslass mit dem zweiten Anschluss verbindet, schließt nicht aus, dass weitere Elemente in der Leitungsanordnung verbaut sind.

Auf diese Weise weist das Flüssiggas-Leitungssystem eine Reserve-Flüssiggasquelle auf und kann automatisch auf die Reserve-Flüssiggasquelle umschalten, wenn die primäre Flüssiggasquelle leer ist. So kann die Situation vermieden werden, dass im Flüssiggas-Leitungssystem aufgrund der Entleerung der primären Gasquelle das Flüssiggas ausgeht.

Vorzugsweise ist das Umschaltventil stromaufwärts des Durchflusssensors angeordnet. Besonders bevorzugt ist das Umschaltventil stromaufwärts des Gasdruckreglers angeordnet.

Dadurch sind/ist vorteilhafterweise nicht für jede Gasquelle ein separater Durchflusssensor und/oder Gasdruckregler erforderlich. Durch das Anordnen des Umschaltventils stromaufwärts des Gasdruckreglers kann das Umschaltventil den Leitungsdruck der Gasquellen erfassen, so dass es abhängig vom Leitungsdruck der Gasquellen automatisch zwischen der ersten und zweiten Gasquelle umschalten kann.

Vorzugsweise ist das Umschaltventil eingerichtet, ein die Stellung des Umschaltventils charakterisierendes fünftes Signal zu übertragen. Unter dem fünften Signal kann ein Signal verstanden werden, aus welchem ein Rückschluss auf die Stellung des Umschaltventils gezogen werden kann.

Auf diese Weise kann leicht ermittelt werden, ob eine Flüssiggasquelle gerade in Benutzung ist und/oder ob eine der Flüssiggasquellen ausgetauscht werden muss. Zum Beispiel, wenn die Information vorliegt, dass das Umschaltventil vor Kurzem umgeschaltet hat, deutet dies darauf hin, dass eine der Gasquellen leer ist und ausgetauscht werden muss.

Vorzugsweise ist die Steuereinrichtung eingerichtet, das Umschaltventil zwischen der ersten und der zweiten Stellung umzuschalten.

Auf diese Weise können zusätzliche Faktoren berücksichtigt werden, um zwischen der ersten Gasquelle und der zweiten Gasquelle umzuschalten. Solche Faktoren können beispielsweise die Temperatur, die Jahreszeit und/oder der vorhersehbare Bedarf an Flüssiggas sein.

Vorzugsweise ist die Steuereinrichtung eingerichtet, an das Benutzerendgerät die Information zu übertragen, dass das Umschaltventil zwischen der ersten und der zweiten Stellung umgeschaltet wurde.

Vorzugsweise weist das Flüssiggas-Leitungssystem ferner einen zweiten Füllstandsensor für die zweite Gasquelle auf, wobei der Füllstandsensor eingerichtet ist, ein einen Füllstand der zweiten Gasquelle charakterisierendes viertes Signal zu übertragen. Die Steuereinrichtung ist vorzugsweise eingerichtet, das Umschaltventil basierend auf dem dritten Signal und dem vierten Signal zwischen der ersten Stellung und der zweiten Stellung umzuschalten.

Auf diese Weise können die von den Füllstandsensoren ermittelten Füllstände berücksichtigt werden, um zwischen der ersten und der zweiten Gasquelle umzuschalten. Dies ermöglicht ein genaueres Umschalten zwischen den Gasquellen.

Vorzugsweise ist die Steuereinrichtung eingerichtet, einen Rückschluss auf eine Leckage im Flüssiggas-Leitungssystem zu ziehen, wenn das erste Signal anzeigt, dass die Flüssiggas-Durchflussrate kleiner als ein Schwellwert, vorzugsweise null, ist, und das vierte Signal anzeigt, dass der Füllstand, vorzugsweise das Gewicht der zweiten Gasquelle, abnimmt. Zusätzlich oder alternativ ist die Steuereinrichtung vorzugsweise eingerichtet, einen Rückschluss auf eine Leckage im Flüssiggas-Leitungssystem zu ziehen, wenn das zweite Signal anzeigt, am zweiten Anschluss kein Verbrauch vorliegt, vorzugsweise dass die Verbrauchsklappe geschlossen ist, und das vierte Signal anzeigt, dass der Füllstand, vorzugsweise das Gewicht der zweiten Gasquelle abnimmt. Der Schwellwert kann vorzugsweise 5 g/Woche betragen.

Vorzugsweise ist die Steuereinrichtung eingerichtet, an das Benutzerendgerät die Information zu übertragen, dass eine Leckage im Flüssigas-Leitungssystem vorliegt.

Vorzugsweise ist die Steuereinrichtung eingerichtet, einen Rückschluss auf eine Leckage zwischen der ersten Gasquelle und dem Durchfluss-Sensor zu ziehen, wenn das erste Signal anzeigt, dass die Flüssiggas-Durchflussrate kleiner als ein Schwellwert, vorzugsweise null, ist und das dritte Signal anzeigt, dass der Füllstand, vorzugsweise das Gewicht, der ersten Gasquelle abnimmt. Alternativ oder zusätzlich ist die Steuereinrichtung eingerichtet, einen Rückschluss auf eine Leckage zwischen der zweiten Gasquelle und dem Durchfluss-Sensor zu ziehen, wenn das erste Signal anzeigt, dass die Flüssiggas-Durchflussrate kleiner als ein Schwellwert, vorzugsweise null ist und das vierte Signal anzeigt, dass der Füllstand, vorzugsweise das Gewicht der zweiten Gasquelle abnimmt. Der Schwellwert kann vorzugsweise 5 g/Woche betragen.

Vorzugsweise ist die Steuereinrichtung eingerichtet, an das Benutzerendgerät die Information zu übertragen, dass eine Leckage zwischen der ersten Gasquelle und dem Durchfluss-Sensor vorliegt. Vorzugsweise ist die Steuereinrichtung eingerichtet, an das Benutzerendgerät die Information zu übertragen, dass eine Leckage zwischen der zweiten Gasquelle und dem Durchfluss-Sensor vorliegt.

Vorzugsweise weist das Flüssiggas-Leitungssystem eine in der Leitungsanordnung angeordnete erste Filtereinheit auf.

Vorzugsweise ist die Filtereinheit eingerichtet, der Steuereinrichtung ein den Zustand der Filtereinheit charakterisierendes sechstes Signal zu übertragen.

Unter dem Zustand der Filtereinheit kann beispielsweise ein Abnutzungsgrad der Filtereinheit verstanden werden. Beispielsweise kann das sechste Signal die Information enthalten, dass die Filtereinheit bzw. der Filter der Filtereinheit ausgetauscht werden muss. Der Abnutzungsgrad des Filters und/oder der Filtereinheit kann z. B. aus dem gemessenen Durchfluss abgeleitet werden.

Vorzugsweise ist die Steuereinrichtung eingerichtet, basierend auf dem sechsten Signal zu ermitteln, ob ein Filter der Filtereinheit und/oder die Filtereinheit ausgetauscht werden muss.

Vorzugsweise ist die Steuereinrichtung eingerichtet, an ein Benutzerendgerät die Information zu übertragen, dass der Filter der Filtereinheit und/oder die Filtereinheit ausgetauscht werden muss.

Auf diese Weise können die Filter besser bzw. länger ausgenutzt werden, im Vergleich zur Praxis, dass der Filter nur eine feste Zeitspanne lang verwendet wird.

Vorzugsweise weist das Flüssiggas-Leitungssystem ein in der Leitungsanordnung angeordnetes Abschalt- und/oder Crash-Ventil auf. Dabei ist das Abschalt- und/oder Crash-Ventil zwischen einem offenen Zustand und einem geschlossenen Zustand umschaltbar, und eingerichtet, bei Überschreiten einer vorbestimmten Beschleunigung, vorzugsweise mindestens 2g oder mindestens 3g, in den geschlossenen Zustand umzuschalten.

Das Crash-Ventil kann beispielsweise, wie in der europäischen Anmeldung 19 20 9432.4 (Anmeldetag: 15.11.2019) offenbart, ausgebildet sein.

Vorzugsweise ist das Abschalt- und/oder Crash-Ventil eingerichtet, der Steuereinrichtung ein den Zustand des Abschalt- und/oder Crash-Ventils charakterisierendes siebtes Signal zu übertragen. Die Steuereinrichtung ist eingerichtet, basierend auf dem siebten Signal zu ermitteln, ob das Abschalt- und/oder Crash-Ventil in der Schließstellung ist.

Auf diese Weise kann leicht ermittelt werden, ob das Abschalt- und/oder Crash-Ventil in der Schließstellung ist. Es ist daher nicht nötig, direkt am Abschalt- und/oder Crash-Ventil zu prüfen, ob dieses in der Schließstellung ist.

Vorzugsweise ist die Steuereinrichtung eingerichtet, das siebte Signal und/oder die Information, dass das Abschalt- und/oder Crash-Ventil in der Schließstellung ist, an das Benutzerendgerät zu übertragen.

Vorzugsweise weist das Flüssiggas-Leitungssystem einen Temperatursensor auf, der eingerichtet ist, eine Temperatur in einem Innenraum (insbesondere in einem Innenraum des Fahrzeugs) zu messen. Vorzugsweise ist der Temperatursensor eingerichtet, der Steuereinrichtung ein eine Temperatur des Innenraums charakterisierendes achtes Signal zu übertragen.

Unter dem achten Signal, das die Temperatur des Innenraums charakterisiert, ist zu verstehen, dass aus dem achten Signal ein Rückschluss auf die Temperatur des Innenraums gezogen werden kann.

Vorzugsweise ist die Steuereinrichtung eingerichtet, eine die Temperatur des Innenraums betreffende Information an das Benutzerendgerät zu übertragen.

Auf diese Weise können Fehler im Gasleitungssystem, die Einfluss auf die Temperatur des Innenraums haben, detektiert werden. Da eine Vielzahl von Fehlern einen solchen Einfluss haben können, können unterschiedliche Arten von Fehlern detektiert werden.

Vorzugsweise ist die Steuereinrichtung eingerichtet, basierend auf dem achten Signal, einen Rückschluss auf eine Brandsituation zu ziehen.

Vorzugsweise ist die Steuereinrichtung eingerichtet, eine eine Brandsituation betreffende Information an das Benutzerendgerät zu übertragen.

Vorzugsweise ist die Steuereinrichtung eingerichtet, ein Datum und/oder eine Zeit zu erfassen. Beispielsweise kann die Steuereinrichtung einen Zeitgeber aufweisen, der das Datum und/oder die Zeit ermittelt. Das Datum und/oder die Zeit kann auch über GPS-Daten und/oder über Mobilfunkdaten ermittelt werden.

Da der Gasverbrauch mit dem Datum und/oder der Zeit korrelieren kann, kann diese Information zusätzlich verwendet werden, um Fehler im System zu detektieren.

Vorzugsweise ist die Steuereinrichtung eingerichtet, basierend auf dem Datum und/oder der Zeit sowie dem achten Signal einen Rückschluss auf eine untypische Verbrauchssituation zu ziehen. Vorzugsweise ist die Steuereinrichtung eingerichtet, eine eine untypische Verbrauchssituation betreffende Information an das Benutzerendgerät zu übertragen.

Darüber hinaus kann über die Erfassung der Temperatur (achtes Signal) in Verbindung mit der Erfassung eines Verbrauchs (abgeleitet aus dem ersten, zweiten, dritten oder vierten Signal) ein untypischer Verbrauch durch das Steuergerät ermittelt werden, etwa eine eingeschaltete Heizung bei hoher Temperatur. Eine zusätzliche Berücksichtigung des Datums durch die Steuereinheit kann hierbei hilfreich sein, da aus diesem die Jahreszeit abgeleitet werden kann.

Die Steuereinrichtung kann ferner eingerichtet sein, eine Außentemperatur zu erfassen, etwa über ein entsprechendes Signal eines Temperatursensors oder über die Abfrage von Wetterdaten für den jeweiligen Ort. Durch diese kann in Verbindung mit der Erfassung eines Verbrauchs und/oder einer Innentemperatur ebenfalls ein ungewöhnlicher Verbrauch erfasst und/oder ausgeschlossen werden. So kann die Steuereinrichtung z. B. einen hohen Verbrauch (insbesondere der Heizung) bei geringer Außentemperatur als unproblematisch erfassen, während ein hoher Verbrauch bei hoher Außentemperatur als Indiz für einen Defekt gelten kann. Eine solche Detektion kann auch unabhängig von der Detektion einer Leckage erfolgen.

Vorzugsweise sind alle in der Leitungsanordnung angeordnete Komponenten wie Ventile, Hähne und/oder Verschlusseinrichtungen eingerichtet, ein entsprechendes, den Zustand der jeweiligen Komponente charakterisierendes Signal an die Steuereinrichtung zu übertragen.

Auf diese Weise wird eine umfassende Kontrolle über das System bereitgestellt. Darüber hinaus kann zuverlässig ein Rückschluss auf Leckagen gezogen werden, wenn der Zustand aller Komponenten dem Steuergerät bekannt ist.

Vorzugsweise ist der Durchflusssensor, der Verbrauchssensor, gegebenenfalls der erste Füllstandsensor, gegebenenfalls der zweite Füllstandsensor, gegebenenfalls das Umschaltventil, gegebenenfalls die Filtereinheit, gegebenenfalls das Abschaltventil und/oder Crash-Ventil eingerichtet, das erste, zweite, gegebenenfalls dritte, gegebenenfalls vierte, gegebenenfalls fünfte, gegebenenfalls sechste, und/oder gegebenenfalls siebte Signal kabellos an die Steuereinrichtung zu übertragen.

Mit anderen Worten können einzelne der beschriebenen Komponenten und/oder jedes der beschriebenen Komponenten des Flüssiggas-Leitungssystems dazu eingerichtet sein, das von ihm erzeugte Signal kabellos an die Steuereinrichtung zu übertragen. Die kabellose Signalübertragung kann über einen üblichen Funkstandard wie WLAN, ZigBee und/oder Bluetooth erfolgen.

Auf diese Weise kann das Flüssiggas-Leitungssystem einfacher montiert, gewartet und/oder angepasst werden.

Vorzugsweise ist die Steuereinrichtung eingerichtet, das Flüssiggas-Leitungssystem betreffende Rückschlüsse an ein Benutzerendgerät zu übertragen. Alternativ stellt ein Benutzerendgerät die Steuereinrichtung dar. Dadurch kann ein Benutzer schnell Information über das Flüssiggas-Leitungssystem gewinnen, insbesondere über Fehler im Flüssiggas-Leitungssystem informiert werden.

Ein Vorteil der Alternative, dass das Benutzerendgerät die Steuereinrichtung darstellt, ist, dass keine zusätzliche Steuereinrichtung im Flüssiggas-Leitungssystem notwendig ist.

Vorzugsweise ist die Steuereinrichtung eingerichtet, dem Benutzerendgerät eine das Vorliegen einer Leckage betreffende Information zu übertragen.

Vorzugsweise ist die Steuereinrichtung eingerichtet, dem Benutzerendgerät eine den Füllstand der ersten und/oder zweiten Gasquelle betreffende Information zu übertragen.

Vorzugsweise ist die Steuereinrichtung eingerichtet, dem Benutzerendgerät eine die Stellung des Umschaltventils betreffende Information zu übertragen.

Vorzugsweise ist die Steuereinrichtung eingerichtet, dem Benutzerendgerät eine den Zustand der Filtereinheit betreffende Information zu übertragen.

Vorzugsweise ist die Steuereinrichtung eingerichtet, dem Benutzerendgerät eine den Zustand des Abschalt- und/oder Crash-Ventils betreffende Information zu übertragen.

Vorzugsweise ist die Steuereinrichtung eingerichtet, dem Benutzerendgerät eine das Vorliegen einer Brandsituation und/oder eines untypischen Verbrauchs betreffende Information zu übertragen.

Eine weitere Ausführungsform der Erfindung betrifft ein Fahrzeug, vorzugsweise ein Reisemobil, Wohnwagen oder Schiff, wobei auch Caravans und Campingbusse umfasst sind, mit einem Flüssiggas-Leitungssystem, wie es im Kontext der Erfindung beschrieben ist.

Eine weitere Ausführungsform der Erfindung betrifft ein Verfahren zum Detektieren einer Leckage in einem Flüssiggas-Leitungssystem, das vorzugsweise von einer Steuereinrichtung eines Flüssiggas-Leitungssystems ausgeführt wird, das eine Leitungsanordnung mit einem ersten Anschluss für eine erste Gasquelle und einen zweiten Anschluss für einen Gasverbraucher aufweist. Das Verfahren weist die folgenden Schritte auf:
Ermitteln einer Flüssiggas-Durchflussrate an einer bestimmten Position der Leitungsanordnung und/oder Ermitteln eines Flüssiggas-Verbrauchs mittels eines stromabwärts der bestimmten Position angeordneten Verbrauchssensors und/oder Ermitteln einer Abnahme eines Füllstands, vorzugsweise eines Gewichts, der ersten Gasquelle;
Verarbeiten der Flüssiggas-Durchflussrate und/oder des Flüssiggas-Verbrauchs und/oder der Abnahme des Füllstands, vorzugsweise des Gewichts, zum Ermitteln, ob eine ungewöhnliche Verbrauchssituation vorliegt.

Hierbei treffen die bezüglich des Flüssiggas-Leitungssystems beschriebenen Erklärungen und bevorzugten Merkmale ebenso auf das Verfahren zu. Insbesondere kann das Verfahren weitere Schritte aufweisen, die im Kontext des Flüssiggas-Leitungssystems beschrieben sind. Eine weitere Ausführungsform der Erfindung betrifft ein Computerprogramm, umfassend Befehle, die bei der Ausführung des Programms durch ein Steuergerät dieses veranlassen, das Verfahren, wie es im Kontext der Erfindung beschrieben ist, durchzuführen.

Eine weitere Ausführungsform der Erfindung betrifft ein computerlesbares Medium, auf dem das Computerprogramm, wie es im Kontext der Erfindung beschrieben ist, gespeichert ist. Eine weitere Ausführungsform der Erfindung betrifft ein Steuergerät umfassend einen Prozessor, der eingerichtet ist, um das Verfahren, wie es im Kontext der Erfindung beschrieben ist, auszuführen.

### KURZE BESCHREIBUNG DER ZEICHNUNGEN

Die vorliegende Erfindung ist anhand von beispielhaften Ausführungsbeispielen, die in den beigefügten Figuren gezeigt sind, detaillierter beschrieben. Die Figuren sollen den Schutzumfang der Ansprüche nicht beschränken. Es zeigen:
Figur 1 ein Flüssiggas-Leitungssystem gemäß einem Ausführungsbeispiel der Erfindung, und
Figur 2 ein Fahrzeug mit einem Flüssiggas-Leitungssystem gemäß einem Ausführungsbeispiel der Erfindung.

### DETAILLIERTE BESCHREIBUNG VON AUSFÜHRUNGSBEISPIELEN

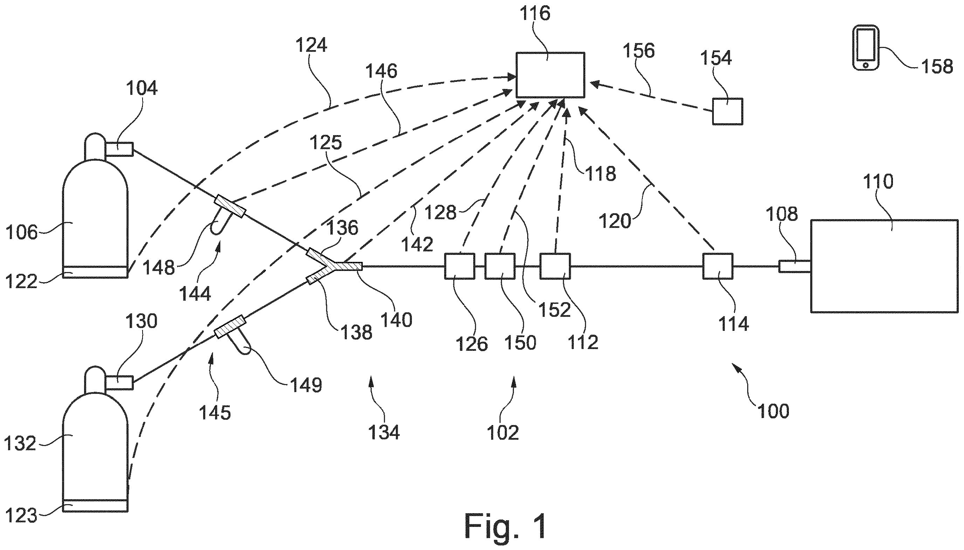

In Figur 1 ist ein Flüssiggas-Leitungssystem 100 gemäß einem Ausführungsbeispiel der Erfindung gezeigt. Das Flüssiggas-Leitungssystem 100 umfasst eine Leitungsanordnung 102 mit einem ersten Anschluss 104 für eine erste Gasquelle 106, einem zweiten Anschluss 108 für einen Verbraucher 110 sowie einem dritten Anschluss 130 für eine zweite Gasquelle 132. Die beiden Gasquellen 106 und 132 sind über ein Umschaltventil 134 mit dem stromabwärtigen Teil des Leitungssystems 100 verbunden. Dabei ist die erste Gasquelle 106 mit einem ersten Einlass 136 und die zweite Gasquelle 132 mit einem zweiten Einlass 138 des Umschaltventils 134 verbunden. Ferner ist der stromabwärtige Teil der Leitungsanordnung 102 mit einem Auslass 140 des Umschaltventils 134 verbunden. Das Umschaltventil 134 ist eingerichtet, entweder die erste Gasquelle 106 oder die zweite Gasquelle 132 mit dem stromabwärts des Umschaltventils 134 angeordneten Teil des Flüssiggas-Leitungssystems 100 zu verbinden und zwischen der ersten Gasquelle 106 und der zweiten Gasquelle 132 umzuschalten. Das heißt, dass das Umschaltventil 134 zwischen einer ersten Stellung, in der der erste Einlass 136 mit dem Auslass 140 verbunden ist, und einer zweiten Stellung, in der der zweite Einlass 138 mit dem Auslass 140 verbunden ist, umschaltbar ist.

Die Leitungsanordnung 102 umfasst ferner einen Durchflusssensor 112, einen Gasdruckregler 126 sowie ein Abschalt- und/oder Crash-Ventil 150. Außerdem umfasst die Leitungsanordnung 102 einen Verbrauchssensor 114, der stromabwärts des Durchflusssensors 112, vorzugsweise am oder nahe beim zweiten Anschluss 108 angeordnet ist. Zwischen dem ersten Anschluss 104 und dem Umschaltventil 134 ist außerdem eine erste Filtereinheit 144 mit einem ersten Filter 148 in der Leitungsanordnung 102 angeordnet. Gleichermaßen ist zwischen dem dritten Anschluss 130 und dem Umschaltventil 134 eine zweite Filtereinheit 145 mit einem Filter 149 in der Leitungsanordnung 102 angeordnet.

Zudem ist an der ersten Gasquelle 106 ein erster Füllstandsensor 122, z.B. ein Gewichtssensor, angeordnet. Ebenso ist an der zweiten Gasquelle 132 ein weiterer Füllstandsensor 123, z.B. Gewichtsensor, angeordnet.

Das Flüssiggas-Leitungssystem umfasst ferner eine Steuereinrichtung 116. Diese Steuereinrichtung 116 kann Daten von den verschiedenen Komponenten des Leitungssystems 102 empfangen und daraus Rückschlüsse auf den Zustand des Leitungssystems ziehen.

So ist der Durchflusssensor 112 eingerichtet, der Steuereinrichtung 116 ein erstes Signal 118 zu übertragen, welches eine Flüssiggas-Durchflussrate der Leitungsanordnung 102 durch den Durchflusssensor 112 charakterisiert. Der Verbrauchssensor 114 ist eingerichtet, der Steuereinrichtung 116 ein zweites Signal 120 zu übertragen, welches charakterisiert, ob am Anschluss 108 ein Flüssiggas-Verbrauch durch den Verbraucher 110 erfolgt. Die Information, ob am zweiten Anschluss 108 ein Verbrauch mittels des Verbrauchers 110 erfolgt, kann beispielsweise dadurch gewonnen werden, dass eine Klappe des Verbrauchssensors geöffnet ist. Das heißt, der Verbrauchssensor ist vorzugsweise als Verbrauchsklappe ausgebildet.

Weiterhin ist der erste Füllstandsensor 122 eingerichtet, der Steuereinrichtung ein drittes Signal 124 zu übertragen, welches einen Füllstand der ersten Gasquelle 106 charakterisiert. Ebenso ist der zweite Füllstandsensor 123 eingerichtet, der Steuereinrichtung 116 ein Signal 125 zu übertragen, das den Füllstand der zweiten Gasquelle 132 charakterisiert. Der Füllstand der ersten- und/oder zweiten Gasquelle 106, 132 kann beispielsweise über eine Gewichtsmessung erfolgen.

Der Gasdruckregler 126 ist optional eingerichtet, der Steuereinrichtung 116 ein neuntes Signal 128 zu übertragen, das einen gewünschten und/oder einen tatsächlichen Gasdruck in der Leitungsanordnung 102 und/oder im Gasdruckregler 126 charakterisiert.

Das Umschaltventil 134 ist eingerichtet, der Steuereinrichtung 116 ein fünftes Signal 142 zu übertragen, das eine Stellung des Umschaltventils 134 charakterisiert. Beispielsweise kann das fünfte Signal 142 die Information enthalten, ob der erste Einlass 136 oder der zweite Einlass 138 mit dem Auslass 140 des Umschaltventils 134 verbunden ist. Optional kann die Steuereinrichtung 116 auch eingerichtet sein, dem Umschaltventil 134 ein Signal zu übertragen, um das Umschaltventil 134 zwischen einer ersten Stellung, in der der erste Einlass 136 mit dem Auslass 140 verbunden ist, und einer zweiten Stellung, in der der zweite Einlass 138 mit dem Auslass 140 verbunden ist, umzuschalten.

Die erste Filtereinheit 144 kann dazu eingerichtet sein, der Steuereinrichtung 116 ein sechstes Signal 146 zu übertragen, welches einen Zustand der ersten Filtereinheit 144 und/oder des Filters 148 der ersten Filtereinheit 144 charakterisiert. Ebenso kann die zweite Filtereinheit 145 eingerichtet sein, der Steuereinrichtung 116 ein Signal zu übertragen, das den Zustand der zweiten Filtereinheit 145 und/oder des Filters 149 der zweiten Filtereinheit 145 charakterisiert.

Das Abschalt- und/oder Crash-Ventil 150 kann dazu eingerichtet sein, der Steuereinrichtung 116 ein siebtes Signal 152 zu übertragen, das eine Information enthält, dass bzw. ob das Abschalt- und/oder Crash-Ventil 150 in der Schließstellung ist.

Das Leitungssystem 102 umfasst ferner einen Temperatursensor 154, der eingerichtet ist eine Temperatur in einem Innenraum, z.B. in einem Innenraum eines Fahrzeugs, vorzugsweise einem Wohnmobil oder einem Wohnwagen, zu messen und der Steuereinrichtung ein achtes Signal 156 zu übertragen, das diese Temperatur charakterisiert.

Das Flüssiggas-Leitungssystems 102 weist somit zwischen dem ersten Anschluss 104 und dem dritten Anschluss 130 auf der einen Seite und dem Durchflusssensor 112 auf der anderen Seite einen ersten Abschnitt auf. Ferner weist das Flüssiggas-Leitungssystem 102 zwischen dem Durchflusssensor 112 und dem zweiten Anschluss 114 einen zweiten Abschnitt auf.

Aus all den oben genannten Signalen kann die Steuereinrichtung verschiedene Rückschlüsse ziehen, die insbesondere eine ungewöhnliche Verbrauchssituation, vorzugsweise eine Leckage, betreffen können.

Beispielsweise ist die Steuereinrichtung 116 eingerichtet, basierend auf dem ersten Signal 118 und dem zweiten Signal 120 zu ermitteln, ob eine Leckage im Flüssiggas-Leitungssystem 100 vorliegt. Genauer gesagt, wenn das erste Signal 118 anzeigt, dass beim Durchflusssensor 112 eine positive Flüssiggas-Durchflussrate gemessen wird und das zweite Signal 120 anzeigt, dass bei dem Verbrauchssensor 114 kein Verbrauch erfolgt, vorzugsweise die Verbrauchsklappe geschlossen ist, kann die Steuereinrichtung 116 einen Rückschluss ziehen, dass zwischen dem Durchflusssensor 112 und dem Verbrauchssensor 114 und/oder dem zweiten Anschluss 108, d.h. im zweiten Abschnitt, eine Leckage vorliegt.

Weiterhin kann die Steuereinrichtung 116 aus dem ersten Signal 118 und dem dritten Signal 124 einen Rückschluss ziehen, dass eine Leckage zwischen dem Durchflusssensor 112 und der ersten Gasquelle 106 vorliegt. Genauer gesagt, wenn das erste Signal 118 anzeigt, dass die Flüssiggas-Durchflussrate beim Durchflusssensor 112 kleiner als ein Schwellwert, vorzugsweise null, ist, und das dritte Signal 124 anzeigt, dass der Füllstand, vorzugsweise das Gewicht, der Gasquelle 106 abnimmt, kann die Steuereinrichtung 116 daraus den Rückschluss ziehen, dass eine Leckage zwischen der Gasquelle 106 und dem Durchflusssensor 112, d.h. im ersten Abschnitt, vorliegt. Ebenso kann die Steuereinrichtung dazu eingerichtet sein, einen Rückschluss zu ziehen, dass eine Leckage zwischen der zweiten Gasquelle 132 und dem Durchflusssensor 112, d.h. im ersten Abschnitt, vorliegt, wenn das erste Signal 118 anzeigt, dass die Flüssiggas-Durchflussrate kleiner als ein Schwellwert, vorzugsweise null, ist, und das Signal 125 anzeigt, dass der Füllstand, vorzugsweise das Gewicht, der zweiten Gasquelle 132 abnimmt. Die Steuereinrichtung 116 ist ferner dazu eingerichtet, einen Rückschluss daraus zu ziehen, dass eine Leckage im Flüssiggas-Leitungssystem 100 vorliegt, wenn das zweite Signal 120 anzeigt, dass beim zweiten Anschluss 108 kein Verbrauch erfolgt und das dritte Signal 124 oder das Signal 125 anzeigt, dass der Füllstand der ersten Gasquelle 106 und/oder der zweiten Gasquelle 132 abnimmt.

Auf diese Weise kann die Steuereinrichtung 116 auch unterscheiden, ob die Leckage zwischen dem Durchflusssensor 112 und dem Verbrauchssensor 114 (und/oder dem zweiten Anschluss 108), d.h. im zweiten Abschnitt, oder zwischen dem ersten oder dritten Anschluss 104, 130 und dem Durchflusssensor 112, d.h. im ersten Abschnitt, vorliegt. So kann die Leckage genauer geortet werden.

Aus dem sechsten Signal 146, das von der ersten Filtereinheit 144 ausgesendet wird oder aus einem entsprechenden Signal, das von der zweiten Filtereinheit 145 ausgesendet wird, kann die Steuereinrichtung 116 den Rückschluss ziehen, dass der Filter 148 der ersten Filtereinheit 144 oder der Filter 149 der zweiten Filtereinheit 145 ausgetauscht werden muss.

Aus dem siebten Signal 152 des Abschalt- und/oder Crash-Ventils 105 kann die Steuereinrichtung 116 den Rückschluss ziehen, dass das Abschalt- und/oder Crash-Ventil ausgelöst wurde und in der Schließstellung ist und dass es wieder in die Offenstellung gebracht werden soll, um das Funktionieren des Flüssiggas-Leitungssystems 100 zu gewährleisten.

Aus dem achten Signal 156 des Temperatursensors 154 kann die Steuereinrichtung den Rückschluss ziehen, dass eine Brandsituation und/oder ein untypischer Verbrauch vorliegt.

Eine solche untypische Situation kann zum Beispiel sein, dass der Gasherd nicht abgeschaltet wurde oder dass die Heizung bei hoher Temperatur und/oder im Sommer aktiviert ist, usw.

Aus dem dritten Signal 124, das vom ersten Füllstandsensor 122 ausgesendet wird, kann die Steuereinrichtung 116 zudem den Rückschluss ziehen, dass die erste Gasquelle 106 leer ist und/oder ausgetauscht werden muss. Analog kann die Steuereinrichtung 116 aus dem Signal 125 des zweiten Füllstandsensors 123 den Rückschluss ziehen, dass die zweite Gasquelle 132 leer ist und/oder ausgetauscht werden muss. Zusätzlich oder alternativ kann die Steuereinrichtung 116 aus dem fünften Signal 142 des Umschaltventils 134 den Rückschluss ziehen, dass das Umschaltventil aufgrund eines niedrigen Gasdrucks umgeschaltet wurde, was darauf hindeutet, dass die erste oder zweite Gasquelle 106, 132 leer ist und/oder ausgetauscht werden muss. Alternativ kann die Steuereinrichtung 116 aus dem Signal 124 oder dem Signal 125 ableiten, dass das Umschaltventil 134 umgeschaltet werden sollte, und dem Umschaltventil 134 ein entsprechendes Steuersignal zukommen lassen.

Die Steuereinrichtung 116 ist ferner eingerichtet, ein Datum und/oder eine Zeit zu erfassen und basierend auf dem Datum und/oder der Zeit und gegebenenfalls dem achten Signal 156, das eine Temperatur charakterisiert, einen Rückschluss auf eine untypische Verbrauchssituation zu ziehen.

Die Steuereinrichtung kann ferner dazu eingerichtet sein, Informationen mit einem Benutzerendgerät 158 auszutauschen. Insbesondere können alle die genannten Rückschlüsse und/oder Informationen an das Benutzerendgerät 158 übertragen werden. Alternativ kann auch das Benutzerendgerät 158 die Steuereinrichtung des Flüssiggas-Leitungssystems 100 darstellen. Das heißt, alle genannten Signale können an das Benutzerendgerät 158 übertragen werden (z. B. direkt oder über einen Netzwerkknoten), welches dann daraus einen oder mehrere der vorher genannten Rückschlüsse zieht.

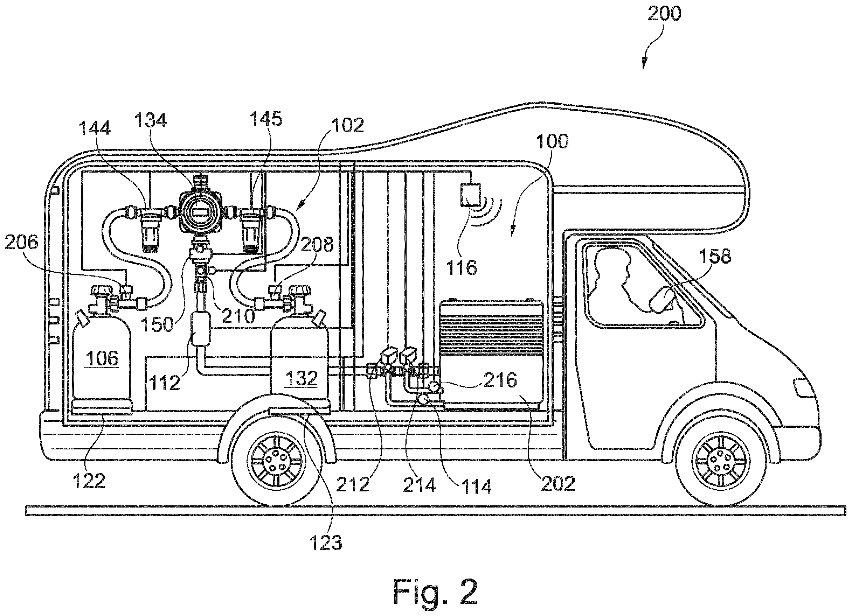

In Figur 2 ist ein Fahrzeug gemäß einem Ausführungsbeispiel der Erfindung gezeigt. Bei diesem Ausführungsbeispiel handelt es sich beim Fahrzeug um ein Reisemobil 200. Jedoch kann dieses Fahrzeug ebenso ein Wohnwagen oder ein Schiff sein. Das Fahrzeug 200 umfasst ein Flüssiggas-Leitungssystem 100 mit einer Flüssiggas-Leitungsanordnung 102. Die Flüssiggas-Leitungsanordnung 102 ist an zwei Gasquellen 106 und 132 angeschlossen. Der erste Anschluss 206 für die erste Gasquelle 106 sowie der dritte Anschluss 208 für die zweite Gasquelle 132 sind vorzugsweise jeweils als Schlauchbruchsicherung ausgebildet. Bei einer solchen Schlauchbruchsicherung handelt es sich um ein Ventil, das den Gasfluss unterbricht, wenn es in der nachfolgenden Leitung zu einem Druckabfall kommt, etwa weil eine Undichtheit vorliegt, ein Gasschlauch abreißt oder sich eine Verschraubung löst.

An der ersten Gasquelle 106 und der zweiten Gasquelle 132 sind jeweils Füllstandsensoren, beispielsweise Gewichtssensoren, 122 und 123 angebracht. Die beiden Gasquellen 106 und 132 sind über ein Umschaltventil 134 mit dem stromabwärtigen Teil der Leitungsanordnung 102 verbunden. Zwischen Umschaltventil 134 und erster Gasquelle 106 befindet sich zudem eine erste Filtereinheit 144. Ebenso befindet sich zwischen Umschaltventil 134 und zweiter Gasquelle 132 eine zweite Filtereinheit 145. Stromabwärts des Umschaltventils befindet sich ein Abschalt- und/oder Crashventil 150, ein Kugelhahn 210, ein Durchflusssensor 112 sowie verschiedenen Schnellschlussventile 212 und 214 für Verbraucher. Beispielsweise ist am Schnellschlussventil 212 eine Heizung 202 angeschlossen. Stromabwärts der Schnellschlussventile befindet sich jeweils ein Verbrauchssensor 114, 216. Das heißt, für jeden Verbraucher ist vorzugsweise jeweils ein Schnellschlussventil und ein Verbrauchssensor vorgesehen. Das Flüssiggas-Leitungssystem 100 umfasst zudem eine Steuereinrichtung 116, welche von den genannten Komponenten entsprechende Signale empfangen kann. Zusätzlich zu einem oder mehreren der in Figur 1 genannten Signale können auch die Schlauchbruchsicherungen 206 und 208, der Kugelhahn 201 und/oder die Schnellschlussventile 202 und 214 entsprechende Signale an die Steuereinrichtung 116 übertragen, welche jeweils die Information enthalten, ob diese geöffnet oder geschlossen sind. Die Steuereinrichtung 116 kann zudem wie im Rahmen der Erfindung beschrieben mit dem Benutzerendgerät 158 kommunizieren. Die Steuereinrichtung 116 kann wie im Rahmen der Erfindung beschrieben aus den erhaltenen Informationen Rückschlüsse auf den Zustand des Flüssiggas-Leitungssystems ziehen. Die Steuereinrichtung 116 kann insbesondere Informationen aus mindestens zwei oder mindestens drei der genannten Signale kombinieren, um hierdurch Rückschlüsse auf den Zustand und/oder Fehler im Leitungssystem 100 abzuleiten.

## Patentansprüche

1. Flüssiggas-Leitungssystem (100), aufweisend:
eine Leitungsanordnung (102) mit einem ersten Anschluss (104) für eine erste Gasquelle (106) und einem zweiten Anschluss (108) für einen Gasverbraucher (110);
einen in der Leitungsanordnung (102) angeordneten Durchflusssensor (112);
einen zwischen dem ersten Anschluss (104) und dem Durchflusssensor (112) angeordneten Gasdruckregler (126);
einen in der Leitungsanordnung (102) und stromabwärts des Durchflusssensors (112) angeordneten Verbrauchssensor (114);
einen ersten Füllstandsensor (122) für die erste Gasquelle (106), vorzugsweise einen Gewichtssensor zur Messung des Gewichts der ersten Gasquelle (106); und
eine Steuereinrichtung (116);
wobei ein erster Abschnitt der Leitungsanordnung (102) zwischen dem ersten Anschluss (104) und dem Durchflusssensor (112) und ein zweiter Abschnitt der Leitungsanordnung zwischen dem Durchflusssensor (122) und dem Verbrauchssensor (114) angeordnet ist;
wobei der Durchflusssensor (112) eingerichtet ist, der Steuereinrichtung (116) ein eine Flüssiggas-Durchflussrate charakterisierendes erstes Signal (118) zu übertragen;
wobei der Verbrauchssensor (114) eingerichtet ist, der Steuereinrichtung ein einen am zweiten Anschluss (108) erfolgenden Flüssiggas-Verbrauch charakterisierendes zweites Signal (120) zu übertragen;
wobei der erste Füllstandsensor (122) eingerichtet ist, der Steuereinrichtung (116) ein einen Füllstand der ersten Gasquelle (106) charakterisierendes drittes Signal (124) zu übertragen;
wobei die Steuereinrichtung (116) eingerichtet ist, basierend auf dem ersten Signal (118), dem zweiten Signal (120) und dem dritten Signal (124) zu ermitteln, ob eine Leckage im Flüssiggas-Leitungssystem (100) vorliegt; und
wobei die Steuereinrichtung (116) eingerichtet ist, zwischen einer Leckage im ersten Abschnitt der Leitungsanordnung und einer Leckage im zweiten Abschnitt der Leitungsanordnung zu unterscheiden.

2. Flüssiggas-Leitungssystem (100) nach Anspruch 1,
wobei die Steuereinrichtung (116) eingerichtet ist, einen Rückschluss auf eine Leckage im Flüssiggas-Leitungssystem (100), vorzugsweise im zweiten Abschnitt der Flüssiggas-Leitungsanordnung, zu ziehen, wenn das erste Signal (118) eine positive Flüssiggas-Durchflussrate anzeigt und das zweite Signal (120) anzeigt, dass am zweiten Anschluss (108) kein Flüssiggas-Verbrauch erfolgt.

3. Flüssiggas-Leitungssystem (100) nach einem der vorangehenden Ansprüche, wobei die Steuereinrichtung (116) eingerichtet ist, einen Rückschluss auf eine Leckage im Flüssiggas-Leitungssystem (100), vorzugsweise im zweiten Abschnitt der Flüssiggas-Anordnung, zu ziehen, wenn das erste Signal (118) anzeigt, dass die Flüssiggas-Durchflussrate kleiner als ein Schwellwert, vorzugsweise Null, ist, und das dritte Signal (124) anzeigt, dass der Füllstand, vorzugsweise das Gewicht, der Gasquelle (106) abnimmt.

4. Flüssiggas-Leitungssystem (100) nach Anspruch 3,
wobei die Steuereinrichtung (116) eingerichtet ist, einen Rückschluss auf eine Leckage im Flüssiggas-Leitungssystem (100), vorzugsweise im ersten und/oder zweiten Abschnitt der Flüssiggas-Anordnung, zu ziehen, wenn das zweite Signal (120) anzeigt, dass am zweiten Anschluss (108) kein Flüssiggas-Verbrauch erfolgt, und das dritte Signal (124) anzeigt, dass der Füllstand, vorzugsweise das Gewicht, der ersten Gasquelle (106) abnimmt.

5. Flüssiggas-Leitungssystem (100) nach Anspruch 3 oder 4,
wobei die Steuereinrichtung (116) eingerichtet ist, einen Rückschluss auf eine Leckage im ersten Abschnitt der Flüssiggas-Anordnung zu ziehen, wenn das erste Signal (118) anzeigt, dass die Flüssiggas-Durchflussrate kleiner als ein Schwellwert, vorzugsweise Null, ist, und das dritte Signal (124) anzeigt, dass der Füllstand, vorzugsweise das Gewicht, der ersten Gasquelle (106) abnimmt.

6. Flüssiggas-Leitungssystem (100) nach einem der vorangehenden Ansprüche, wobei die Steuereinrichtung (116) eingerichtet ist, einen Rückschluss auf eine Leckage im zweiten Abschnitt der Flüssiggas-Anordnung zu ziehen, wenn das erste Signal (118) eine positive Flüssiggas-Durchflussrate anzeigt und das zweite Signal (120) anzeigt, dass am zweiten Anschluss (108) kein Flüssiggas-Verbrauch erfolgt.

7. Flüssiggas-Leitungssystem (100) nach einem der vorangehenden Ansprüche, ferner aufweisend:
einen Temperatursensor (154), der eingerichtet ist, eine Temperatur in einem Innenraum zu messen;
wobei der Temperatursensor (154) eingerichtet ist, der Steuereinrichtung (116) ein eine Temperatur des Innenraums charakterisierendes achtes Signal (156) zu übertragen;
wobei die Steuereinrichtung (116) vorzugsweise eingerichtet ist, basierend auf dem achten Signal (156) einen Rückschluss auf eine Brandsituation zu ziehen.

8. Flüssiggas-Leitungssystem (100) nach Anspruch 7,
wobei die Steuereinrichtung (116) eingerichtet ist, ein Datum und/oder eine Zeit zu erfassen;
wobei die Steuereinrichtung (116) vorzugsweise eingerichtet ist, basierend auf dem Datum und/oder der Zeit sowie dem achten Signal (156) einen Rückschluss auf eine untypische Verbrauchssituation zu ziehen.

9. Flüssiggas-Leitungssystem (100) nach einem der vorangehenden Ansprüche,
wobei der Gasdruckregler (126) eingerichtet ist, ein den Gasdruck charakterisierendes neuntes Signal (128) an die Steuereinrichtung (116) zu übertragen.

10. Flüssiggas-Leitungssystem (100) nach Anspruch 9, ferner aufweisend:
einen dritten Anschluss (130) für eine zweite Gasquelle (132);
ein in der Leitungsanordnung angeordnetes Umschaltventil (134), das vorzugsweise stromaufwärts des Durchflusssensors (112) angeordnet ist und das einen ersten Einlass (136), einen zweiten Einlass (138) und einen Auslass (140) aufweist;
wobei die Leitungsanordnung (102) den ersten Einlass (136) mit dem ersten Anschluss (104) verbindet;
wobei die Leitungsanordnung (102) den zweiten Einlass (138) mit dem dritten Anschluss (130) verbindet;
wobei die Leitungsanordnung (102) den Auslass (140) mit dem zweiten Anschluss (108) verbindet; und
wobei das Umschaltventil (134) in eine erste Stellung, in der der erste Einlass (136) mit dem Auslass (140) verbunden ist, und in eine zweite Stellung, in der der zweite Einlass (138) mit dem Auslass (140) verbunden ist, schaltbar ist;
wobei das Umschaltventil (134) eingerichtet ist, ein die Stellung des Umschaltventils (134) charakterisierendes fünftes Signal (142) zu übertragen;
wobei die Steuereinrichtung (116) vorzugsweise eingerichtet ist, das Umschaltventil (134) zwischen der ersten und der zweiten Stellung umzuschalten.

11. Flüssiggas-Leitungssystem (100) nach Anspruch 10, ferner aufweisend:
eine in der Leitungsanordnung (102) angeordnete erste Filtereinheit (144);
wobei die Filtereinheit (144) vorzugsweise eingerichtet ist, der Steuereinrichtung (116) ein den Zustand der Filtereinheit (144) charakterisierendes sechstes Signal (146) zu übertragen und die Steuereinrichtung (116) eingerichtet ist, basierend auf dem sechsten Signal (146) zu ermitteln, ob ein Filter (148) der Filtereinheit (144) ausgetauscht werden muss.

12. Flüssiggas-Leitungssystem (100) nach Anspruch 11, ferner aufweisend:
ein in der Leitungsanordnung (102) angeordnetes Abschalt- und/oder Crash-Ventil (150);
wobei das Abschalt- und/oder Crash-Ventil (150) zwischen einem offenen Zustand und einem geschlossenen Zustand umschaltbar ist; und
wobei das Abschalt- und/oder Crash-Ventil (150) eingerichtet ist, bei Überschreiten einer vorbestimmten Beschleunigung in den geschlossenen Zustand umzuschalten;
wobei das Abschalt- und/oder Crash-Ventil (150) vorzugsweise eingerichtet ist, der Steuereinrichtung (116) ein den Zustand des Abschalt- und/oder Crash-Ventils (150) charakterisierendes siebtes Signal (152) zu übertragen, und die Steuereinrichtung (116) eingerichtet ist, basierend auf dem siebten Signal (152) zu ermitteln, dass das Abschalt- und/oder Crash-Ventil (150) in der Schließstellung ist.

13. Fahrzeug (200), vorzugsweise Wohnwagen, Caravan, Campingbus, oder Wohnmobil oder Schiff mit einem Flüssiggasleitungssystem (100) nach Anspruch 12.

14. Verfahren (300) zum Detektieren einer Leckage in einem Flüssiggas-Leitungssystem (100), welches vorzugsweise von einer Steuereinrichtung (116) des Flüssiggas-Leitungssystems (100) ausgeführt wird,
wobei das Flüssiggas-Leitungssystems (100) eine Leitungsanordnung (102) mit einem ersten Anschluss (104) für eine erste Gasquelle (106), einem Durchflusssensor (112), einem zwischen dem ersten Anschluss (104) und dem Durchflusssensor (112) angeordneten Gasdruckregler (126), einem stromabwärts des Durchflusssensors (112) angeordneten Verbrauchssensor (114) und einem zweiten Anschluss (130) für einen Gasverbraucher (110) aufweist, wobei ein erster Abschnitt des Flüssiggas-Leitungssystems zwischen dem ersten Anschluss (104) und dem Durchflusssensor (112) angeordnet ist und ein zweiter Abschnitt des Flüssiggas-Leitungssystems zwischen dem Durchflusssensor (112) und dem Verbrauchssensor (114) angeordnet ist, wobei das Verfahren (300) aufweist:
Ermitteln einer Flüssiggas-Durchflussrate mittels des Durchflusssensors (112);
Ermitteln eines Flüssiggas-Verbrauchs mittels des Verbrauchssensors (114);
Ermitteln einer Abnahme eines Füllstands, vorzugsweise eines Gewichts, der ersten Gasquelle (106);
Verarbeiten der Flüssiggas-Durchflussrate, des Flüssiggas-Verbrauchs und der Abnahme des Füllstands zum Ermitteln, ob eine Leckage im Flüssiggas-Leitungssystem (100) vorliegt und zum Unterscheiden zwischen einer Leckage im ersten Abschnitt des Flüssiggas-Leitungssystems und einer Leckage im zweiten Abschnitt des Flüssiggas-Leitungssystems.

15. Computerprogramm, umfassend Befehle, die bei der Ausführung des Programms durch ein Steuergerät (116) dieses veranlassen, das Verfahren nach Anspruch 14 durchzuführen.

## Claims

1. Liquid gas piping system (100), comprising:
a piping arrangement (102) with a first connection (104) for a first gas source (106) and a second connection (108) for a gas consumer (110);
a flow sensor (112) disposed in the piping arrangement (102);
a gas pressure regulator (126) disposed between the first connection (104) and the flow sensor (112);
a consumption sensor (114) disposed in the piping arrangement (102) and downstream of the flow sensor (112);
a first filling level sensor (122) for the first gas source (106), preferably a weight sensor for measuring the weight of the first gas source (106); and
a control device (116);
wherein a first portion of the piping arrangement (102) is disposed between the first connection (104) and the flow sensor (112) and a second portion of the piping arrangement is disposed between the flow sensor (122) and the consumption sensor (114);
wherein the flow sensor (112) is configured to transmit to the control device (116) a first signal (118) characterizing a liquid gas flow rate;
wherein the consumption sensor (114) is configured to transmit to the control device a second signal (120) characterizing a liquid gas consumption occurring at the second connection (108);
wherein the first filling level sensor (122) is configured to transmit to the control device (116) a third signal (124) characterizing a filling level of the first gas source (106);
wherein the control device (116) is configured to determine, based on the first signal (118), the second signal (120) and the third signal (124), whether there is a leak in the liquid gas piping system (100); and
wherein the control device (116) is configured to distinguish between a leak in the first portion of the piping arrangement and a leak in the second portion of the piping arrangement.

2. Liquid gas piping system (100) according to claim 1,
wherein the control device (116) is configured to draw a conclusion about a leak in the liquid gas piping system (100), preferably in the second portion of the liquid gas piping arrangement, when the first signal (118) indicates a positive liquid gas flow rate and the second signal (120) indicates that no liquid gas is being consumed at the second connection (108).

3. Liquid gas piping system (100) according to any of the preceding claims,
wherein the control device (116) is configured to draw a conclusion about a leak in the liquid gas piping system (100), preferably in the second portion of the liquid gas arrangement, when the first signal (118) indicates that the liquid gas flow rate is less than a threshold value, preferably zero, and the third signal (124) indicates that the filling level, preferably the weight, of the gas source (106) is decreasing.

4. Liquid gas piping system (100) according to claim 3,
wherein the control device (116) is configured to draw a conclusion about a leak in the liquid gas piping system (100), preferably in the first and/or second portion of the liquid gas arrangement, when the second signal (120) indicates that no liquid gas is being consumed at the second connection (108), and the third signal (124) indicates that the filling level, preferably the weight, of the first gas source (106) is decreasing.

5. Liquid gas piping system (100) according to claim 3 or 4,
wherein the control device (116) is configured to draw a conclusion about a leak in the first portion of the liquid gas arrangement when the first signal (118) indicates that the liquid gas flow rate is less than a threshold value, preferably zero, and the third signal (124) indicates that the filling level, preferably the weight, of the first gas source (106) is decreasing.

6. Liquid gas piping system (100) according to any of the preceding claims,
wherein the control device (116) is configured to draw a conclusion about a leak in the second portion of the liquid gas arrangement when the first signal (118) indicates a positive liquid gas flow rate and the second signal (120) indicates that no liquid gas is being consumed at the second connection (108).

7. Liquid gas piping system (100) according to any of the preceding claims, further comprising:
a temperature sensor (154), configured to measure a temperature in an interior space;
wherein the temperature sensor (154) is configured to transmit to the control device (116) an eighth signal (156) characterizing a temperature of the interior space;
wherein the control device (116) is preferably configured to draw a conclusion about a fire situation based on the eighth signal (156).

8. Liquid gas piping system (100) according to claim 7,
wherein the control device (116) is configured to record a date and/or a time;
wherein the control device (116) is preferably configured to draw a conclusion about an atypical consumption situation based on the date and/or the time as well as on the eighth signal (156).

9. Liquid gas piping system (100) according to any of the preceding claims,
wherein the gas pressure regulator (126) is configured to transmit to the control device (116) a ninth signal (128) characterizing the gas pressure.

10. Liquid gas piping system (100) according to claim 9, further comprising:
a third connection (130) for a second gas source (132);
a switching valve (134) disposed in the piping arrangement, which is preferably disposed upstream of the flow sensor (112) and which has a first inlet (136), a second inlet (138) and an outlet (140);
wherein the piping arrangement (102) connects the first inlet (136) to the first connection (104);
wherein the piping arrangement (102) connects the second inlet (138) to the third connection (130);
wherein the piping arrangement (102) connects the outlet (140) to the second connection (108); and
wherein the switching valve (134) is switchable into a first position, in which the first inlet (136) is connected to the outlet (140), and into a second position, in which the second inlet (138) is connected to the outlet (140);
wherein the switching valve (134) is configured to transmit a fifth signal (142) characterizing the position of the switching valve (134);
wherein the control device (116) is preferably configured to switch the switching valve (134) between the first and the second position.

11. Liquid gas piping system (100) according to claim 10, further comprising:
a first filter unit (144) disposed in the piping arrangement (102);
wherein the filter unit (144) is preferably configured to transmit to the control device (116) a sixth signal (146) characterizing the state of the filter unit (144), and the control device (116) is configured to determine, based on the sixth signal (146), whether a filter (148) of the filter unit (144) needs to be replaced.

12. Liquid gas piping system (100) according to claim 11, further comprising:
a shut-off and/or crash valve (150) disposed in the piping arrangement (102);
wherein the shut-off and/or crash valve (150) is switchable between an open state and a closed state; and
wherein the shut-off and/or crash valve (150) is configured to switch to the closed state when a predetermined acceleration is exceeded;
wherein the shut-off and/or crash valve (150) is preferably configured to transmit to the control device (116) a seventh signal (152) characterizing the state of the shut-off and/or crash valve (150), and the control device (116) is configured to determine, based on the seventh signal (152), that the shut-off and/or crash valve (150) is in the closed position.

13. Vehicle (200), preferably a mobile home, caravan, camper van or a motor home or ship with a liquid gas piping system (100) according to claim 12.

14. Method (300) for detecting a leak in a liquid gas piping system (100), which is preferably carried out by a control device (116) of the liquid gas piping system (100), wherein the liquid gas piping system (100) comprises a piping arrangement (102) with a first connection (104) for a first gas source (106), a flow sensor (112), a gas pressure regulator (126) disposed between the first connection (104) and the flow sensor (112), a consumption sensor (114) disposed downstream of the flow sensor (112) and a second connection (130) for a gas consumer (110), wherein a first portion of the liquid gas piping system is disposed between the first connection (104) and the flow sensor (112) and a second portion of the liquid gas piping system is disposed between the flow sensor (112) and the consumption sensor (114), wherein the method (300) comprises:
determining a liquid gas flow rate by means of the flow sensor (112);
determining a liquid gas consumption by means of the consumption sensor (114);
determining a decrease in a filling level, preferably a weight, of the first gas source (106);
processing the liquid gas flow rate, the liquid gas consumption and the decrease in the filling level in order to determine whether there is a leak in the liquid gas piping system (100) and to distinguish between a leak in the first portion of the liquid gas piping system and a leak in the second portion of the liquid gas piping system.

15. Computer program comprising instructions causing a control apparatus (116) to carry out the method according to claim 14, when the program is executed by the control apparatus (116).

## Revendications

1. Système de conduite de gaz liquéfié (100), présentant :
un ensemble de conduite (102) avec un premier raccord (104) pour une première source de gaz (106) et un deuxième raccord (108) pour un consommateur de gaz (110) ;
un capteur de débit (112) disposé dans l'ensemble de conduite (102) ;
un régulateur de pression de gaz (126) disposé entre le premier raccord (104) et le capteur de débit (112) ;
un capteur de consommation (114) disposé dans l'ensemble de conduite (102) et en aval du capteur de débit (112) ;
un premier capteur de niveau (122) pour la première source de gaz (106), de préférence un capteur de poids pour la mesure du poids de la première source de gaz (106) ; et
un système de commande (116) ;
dans lequel une première partie de l'ensemble de conduite (102) est disposée entre le premier raccord (104) et le capteur de débit (112) et une deuxième partie de l'ensemble de conduite entre le capteur de débit (122) et le capteur de consommation (114) ;
dans lequel le capteur de débit (112) est conçu pour transmettre au système de commande (116) un premier signal (118) caractérisant un débit de gaz liquéfié ;
dans lequel le capteur de consommation (114) est conçu pour transmettre au système de commande un deuxième signal (120) caractérisant une consommation de gaz liquéfié s'effectuant sur le deuxième raccord (108) ;
dans lequel le premier capteur de niveau (122) est conçu pour transmettre au système de commande (116) un troisième signal (124) caractérisant un niveau de la première source de gaz (106) ;
dans lequel le système de commande (116) est conçu pour déterminer sur la base du premier signal (118), du deuxième signal (120) et du troisième signal (124), si une fuite est présente dans le système de conduite de gaz liquéfié (100) ; et
dans lequel le système de commande (116) est conçu pour faire une distinction entre une fuite dans la première partie de l'ensemble de conduite et une fuite dans la deuxième partie de l'ensemble de conduite.

2. Système de conduite de gaz liquéfié (100) selon la revendication 1,
dans lequel le système de commande (116) est conçu pour déduire une fuite dans le système de conduite de gaz liquéfié (100), de préférence dans la deuxième partie de l'ensemble de conduite de gaz liquéfié, lorsque le premier signal (118) indique un débit de gaz liquéfié positif et que le deuxième signal (120) indique qu'aucune consommation de gaz liquéfié ne s'effectue sur le deuxième raccord (108).

3. Système de conduite de gaz liquéfié (100) selon l'une quelconque des revendications précédentes,
dans lequel le système de commande (116) est conçu pour déduire une fuite dans le système de conduite de gaz liquéfié (100), de préférence dans la deuxième partie de l'ensemble de gaz liquéfié, lorsque le premier signal (118) indique que le débit de gaz liquéfié est inférieur à une valeur de seuil, de préférence nul, et le troisième signal (124) indique que le niveau, de préférence le poids, de la source de gaz (106) diminue.

4. Système de conduite de gaz liquéfié (100) selon la revendication 3,
dans lequel le système de commande (116) est conçu pour déduire une fuite dans le système de conduite de gaz liquéfié (100), de préférence dans la première et/ou deuxième partie de l'ensemble de gaz liquéfié, lorsque le deuxième signal (120) indique qu'aucune consommation de gaz liquéfié ne s'effectue sur le deuxième raccord (108), et le troisième signal (124) indique que le niveau, de préférence le poids, de la première source de gaz (106) diminue.

5. Système de conduite de gaz liquéfié (100) selon la revendication 3 ou 4,
dans lequel le système de commande (116) est conçu pour déduire une fuite dans la première partie de l'ensemble de gaz liquéfié, lorsque le premier signal (118) indique que le débit de gaz liquéfié est inférieur à une valeur de seuil, de préférence nul, et le troisième signal (124) indique que le niveau, de préférence le poids, de la première source de gaz (106) diminue.

6. Système de conduite de gaz liquéfié (100) selon l'une quelconque des revendications précédentes,
dans lequel le système de commande (116) est conçu pour déduire une fuite dans la deuxième partie de l'ensemble de gaz liquéfié, lorsque le premier signal (118) indique un débit de gaz liquéfié positif et le deuxième signal (120) indique qu'aucune consommation de gaz liquéfié ne s'effectue sur le deuxième raccord (108).

7. Système de conduite de gaz liquéfié (100) selon l'une quelconque des revendications précédentes, présentant en outre :
un capteur de température (154), qui est conçu pour mesurer une température dans un espace intérieur ;
dans lequel le capteur de température (154) est conçu pour transmettre au système de commande (116) un huitième signal (156) caractérisant une température de l'espace intérieur ;
dans lequel le système de commande (116) est de préférence conçu pour déduire une situation d'incendie sur la base du huitième signal (156).

8. Système de conduite de gaz liquéfié (100) selon la revendication 7,
dans lequel le système de commande (116) est conçu pour acquérir une date et/ou une heure ;
dans lequel le système de commande (116) est de préférence conçu pour déduire une situation de consommation inhabituelle sur la base de la date et/ou de l'heure ainsi que du huitième signal (156).

9. Système de conduite de gaz liquéfié (100) selon l'une quelconque des revendications précédentes,
dans lequel le régulateur de pression de gaz (126) est conçu pour transmettre un neuvième signal (128) caractérisant la pression de gaz au système de commande (116).

10. Système de conduite de gaz liquéfié (100) selon la revendication 9, présentant en outre :
un troisième raccord (130) pour une deuxième source de gaz (132) ;
une soupape de commutation (134) disposée dans l'ensemble de conduite, qui est disposée de préférence en amont du capteur de débit (112) et qui présente une première entrée (136), une deuxième entrée (138) et une sortie (140) ;
dans lequel l'ensemble de conduite (102) relie la première entrée (136) au premier raccord (104) ;
dans lequel l'ensemble de conduite (102) relie la deuxième entrée (138) au troisième raccord (130) ;
dans lequel l'ensemble de conduite (102) relie la sortie (140) au deuxième raccord (108) ; et
dans lequel la soupape de commutation (134) peut basculer dans une première position, dans laquelle la première entrée (136) est reliée à la sortie (140), et dans une deuxième position, dans laquelle la deuxième entrée (138) est reliée à la sortie (140) ;
dans lequel la soupape de commutation (134) est conçue pour transmettre un cinquième signal (142) caractérisant la position de la soupape de commutation (134) ;
dans lequel le système de commande (116) est de préférence conçu pour basculer la soupape de commutation (134) entre la première et la deuxième position.

11. Système de conduite de gaz liquéfié (100) selon la revendication 10, présentant en outre :
une première unité de filtration (144) disposée dans l'ensemble de conduite (102) ;
dans lequel l'unité de filtration (144) est de préférence conçue pour transmettre au système de commande (116) un sixième signal (146) caractérisant l'état de l'unité de filtration (144) et le système de commande (116) est conçu pour déterminer sur la base du sixième signal (146) si un filtre (148) de l'unité de filtration (144) doit être remplacé.

12. Système de conduite de gaz liquéfié (100) selon la revendication 11, présentant en outre :
une soupape de coupure et/ou de choc (150) disposée dans l'ensemble de conduite (102);
dans lequel la soupape de coupure et/ou de choc (150) peut basculer entre un état ouvert et un état fermé ; et
dans lequel la soupape de coupure et/ou de choc (150) est conçue pour basculer dans l'état fermé lorsqu'une accélération prédéfinie est dépassée ;
dans lequel la soupape de coupure et/ou de choc (150) est de préférence conçue pour transmettre au système de commande (116) un septième signal (152) caractérisant l'état de la soupape de coupure et/ou de choc (150), et le système de commande (116) est conçu pour déterminer sur la base du septième signal (152) que la soupape de coupure et/ou de choc (150) est dans la position fermée.

13. Véhicule (200), de préférence roulotte, caravane, camping-car, ou autocaravane ou navire avec un système de conduite de gaz liquéfié (100) selon la revendication 12.

14. Procédé (300) pour détecter une fuite dans un système de conduite de gaz liquéfié (100), lequel est mis en oeuvre de préférence par un système de commande (116) du système de conduite de gaz liquéfié (100),
dans lequel le système de conduite de gaz liquéfié (100) présente un ensemble de conduite (102) avec un premier raccord (104) pour une première source de gaz (106), un capteur de débit (112), un régulateur de pression de gaz (126) disposé entre le premier raccord (104) et le capteur de débit (112), un capteur de consommation (114) disposé en aval du capteur de débit (112) et un deuxième raccord (130) pour un consommateur de gaz (110), dans lequel une première partie du système de conduite de gaz liquéfié est disposée entre le premier raccord (104) et le capteur de débit (112) et une deuxième partie du système de conduite de gaz liquéfié est disposée entre le capteur de débit (112) et le capteur de consommation (114), dans lequel le procédé (300) présente :
la détermination d'un débit de gaz liquéfié au moyen du capteur de débit (112) ;
la détermination d'une consommation de gaz liquéfié au moyen du capteur de consommation (114) ;
la détermination d'une diminution d'un niveau, de préférence d'un poids, de la première source de gaz (106) ;
le traitement du débit de gaz liquéfié, de la consommation de gaz liquéfié et de la diminution du niveau pour déterminer si une fuite est présente dans le système de conduite de gaz liquéfié (100) et pour faire une distinction entre une fuite dans la première partie du système de conduite de gaz liquéfié et une fuite dans la deuxième partie du système de conduite de gaz liquéfié.

15. Produit-programme informatique, comprenant des instructions qui, lors de la mise en oeuvre du programme par un appareil de commande (116), amènent celui-ci à mettre en oeuvre le procédé selon la revendication 14.
